Europäisches Patentamt

European Patent Office

Office européen des brevets

(11) Numéro de publication: **0 330 073**
**A1**

## (12) DEMANDE DE BREVET EUROPEEN

(21) Numéro de dépôt: **89102662.7**

(22) Date de dépôt: **16.02.89**

(51) Int. Cl.4: **B01D 29/30 , B01D 29/02**

(30) Priorité: **24.02.88 CH 687/88**

(43) Date de publication de la demande:
**30.08.89 Bulletin 89/35**

(84) Etats contractants désignés:
**AT BE CH DE ES FR GB GR IT LI LU NL SE**

(71) Demandeur: **Doucet, Charles**
**13, Avenue Léonard Sismondi**
**CH-1224 Chêne-Bougeries/Genève(CH)**

(72) Inventeur: **Doucet, Charles**
**13, Avenue Léonard Sismondi**
**CH-1224 Chêne-Bougeries/Genève(CH)**

(74) Mandataire: **Micheli & Cie**
**118, rue du Rhône Case postale 47**
**CH-1211 Genève 6(CH)**

(54) **Filtre à panier.**

(57) L'écoulement du fluide dans le filtre, généralement de l'eau, s'effectue substantiellement tangentiellement à la paroi 4 de l'élément filtrant sur la
quasi totalité de celle-ci en sens opposés d'un côté
et de l'autre de cette paroi 4.

FIG. 1

EP 0 330 073 A1

## FILTRE A PANIER

Les filtres à panier (Basket Filter) sont très anciens; ils continuent cependant à être toujours utilisés car ils sont simples et bien moins chers que les filtres automatiques.

Dans l'ensemble les filtres à panier n'ont pas sensiblement évolués et ils ont toujours été pensés en statique.

En filtration les paniers classiques ne tiennent aucun compte de la dynamique du fluide qui arrive ou sort perpendiculairement à la surface filtrante. Il en résulte des zones d'efforts particulières qui voient les impuretés se planter dans l'élément filtrant et souvent le détériorer.

Dans ces conditions aucun nettoyage n'est possible, même si on inverse le courant (back-wash).

Il existe également des filtres auto-nettoyants tels ceux à contre-lavage, toutefois leur conception ne permet pas, sauf démontage complet et long du filtre, voire remplacement de l'élément filtrant, un nettoyage de l'élément filtrant par voie mécanique, brossage ou lavage, lorsque celui-ci est trop encrassé pour être nettoyé par contre-lavage.

On connaît notamment du brevet GB-A-118.855 un filtre pour la séparation de solides et de liquides comprenant une vis conique entraînée en rotation dans un récipient conique correspondant formant un tamis. Les parties solides sont entraînées et mises en mouvement par la rotation de la vis et non par l'action dynamique et hydraulique de l'écoulement du fluide à filtrer. Les vitesses mises en jeux sont faibles.

Le brevet US-A-1 579 205 décrit un filtre à cartouche classique dans lequel le fluide à filtrer est forcé au travers d'une cartouche filtrante à faible vitesse.

Le brevet GB-A-2 134 807 décrit un filtre à cartouche facilement démontable dans lequel le fluide à filtrer est délivré à la cartouche filtrante tubulaire par l'une de ses extrémités annulaires, comme c'est le cas également d'ailleurs dans le brevet US-A-1 579 205 précité.

La demande EP-A2-057 034 décrit un filtre dont l'élément filtrant cylindrique est en un matériau textile, et la manière de monter cet élément filtrant.

Tous ces filtres existants sont conçus d'un point de vue mécanique et statique et le flux de liquide à filtrer traverse généralement l'élément filtrant pratiquement perpendiculairement à sa paroi filtrante.

La présente invention a pour but la réalisation d'un filtre à panier qui puisse être nettoyé hydrauliquement, le panier restant en place, évitant que les impuretés ne se plantent dans l'élément filtrant et ne le détériorent et qui permette néanmoins un démontage facile et rapide du filtre pour son nettoyage mécanique ou son remplacement.

La présente invention a également pour but la réalisation d'un filtre permettant une grande vitesse de filtration et dans lequel l'efficacité de filtration est augmentée grâce à un agencement particulier mettant en oeuvre une action hydraulique dynamique du fluide à traiter et non par un effet filtrant purement statique. De plus, tous ces filtres connus présentent l'inconvénient d'imposer au fluide à filtrer des écoulements présentant des angles de 90° à 180° contraires à un bon fonctionnement du filtre du point de vue hydraulique.

Le filtre à panier selon la présente invention tend à obvier aux inconvénients précités et à atteindre les buts émis plus haut et se distingue par le fait que l'écoulement du fluide, généralement de l'eau, s'effectue substantiellement tangentiellement à la paroi de l'élément filtrant sur la quasi totalité de celle-ci en sens opposés d'un côté et de l'autre de cette paroi.

Le filtre à panier selon la présente invention se distingue par les caractéristiques décrites et revendiquées dans ce qui suit, seules ou en combinaison.

Le dessin annexé illustre deux formes d'exécution du filtre à panier selon l'invention.

La figure 1 est une vue schématique en coupe longitudinale d'une première forme d'exécution du filtre.

La figure 2 illustre en coupe partielle et à plus grande échelle la fixation de l'élément filtrant ou panier.

La figure 3 illustre une vue schématique en coupe longitudinale de la seconde forme d'exécution du filtre.

La différence fondamentale entre le présent filtre à panier et le filtre de ce type existant réside dans le fait que le présent filtre a été réalisé à partir de considérations relevant de la dynamique des fluides et non pas de considérations statiques. C'est l'étude du point de vue de la dynamique de l'eau qui préside à la réalisation de ce filtre à panier et qui a complètement modifié la conception du filtre à panier conventionnel. La notion de vitesse, tant en amplitude qu'en direction, est fondamentale dans la conception du nouveau filtre à panier.

Dans les filtres illustrés l'écoulement du fluide se fait toujours tangentiellement à la surface filtrante ; il en résulte un auto-nettoyage de cette surface pendant la filtration et surtout pendant la chasse que l'on peut faire tangentiellement à cette surface filtrante.

Le nettoyage est assuré par l'ouverture de la chasse car une vitesse de balayage est obtenue par la pression de service et le débit nominal qui en résulte.

Cette chasse peut se faire pendant le fonctionnement du filtre par une vanne manuelle ou automatique.

Si l'élément à la longue devait se colmater, son démontage serait aussi simple que dans un quelconque filtre à panier. Ce qui n'est jamais le cas dans un filtre automatique.

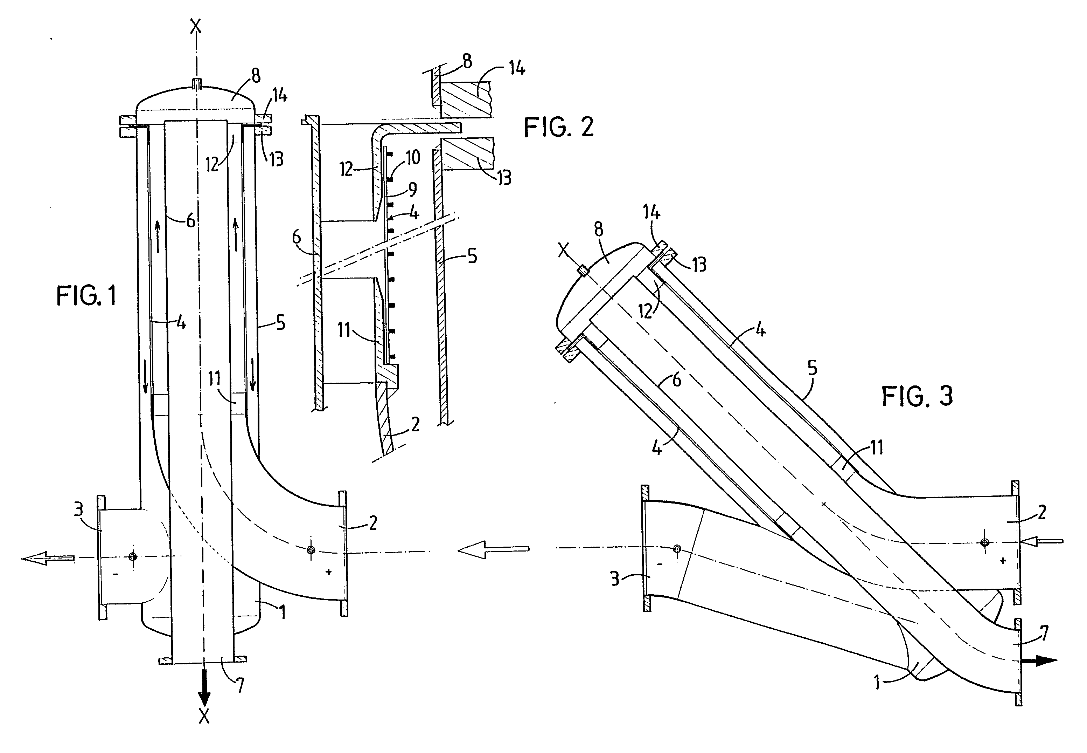

Les figures 1 et 2 représentent des filtres à panier à nettoyage par balayage tangentiel de la surface filtrante.

Les sections de passage de l'eau sont calculées pour assurer normalement une vitesse de balayage de 3 à 10 m/s lors de la chasse sur toute la longueur de la cartouche.

En filtration normale la vitesse de balayage varie de 6 à 0 m/s selon le débit et la zone de la cartouche envisagée (la vitesse décroît de bas en haut).

Les filtres ont été calculés pour une filtration normale mais il est possible de diminuer la hauteur de la cartouche si l'eau est propre et que l'on ne veut qu'une filtration de sécurité en cas de transport exceptionnel d'impuretés.

Par contre, il est possible en cas d'eau chargée d'augmenter la surface filtrante en allongeant la cartouche, ou mieux en remplaçant l'élément filtrant cylindrique unique par une couronne de tubes filtrants cylindriques. Le calcul montre que l'on peut normalement doubler ainsi une surface filtrante pour une longueur donnée de cartouche.

De par cette conception on obtient :

- un filtre à panier à nettoyage automatique espaçant considérablement les démontages de la crépine,

- un filtre automatique dont on peut démonter l'élément filtrant avec autant de facilité que dans un filtre à panier conventionnel,

- un filtre intermédiaire en prix entre le filtre à panier classique bon marché et le filtre automatique très onéreux,

- un filtre simple pouvant être automatisé facilement par la suite.

Le filtre se compose essentiellement d'un corps 1 avec entrée 2 à droite et sortie 3 à gauche, d'un élément filtrant 4 placé entre une enveloppe 5 et un tube axial 6 "accélérateur", ouvert à son extrêmité supérieure, qui sert aussi de chasse par sa sortie inférieure 7 normalement obturée par une vanne non illustrée.

Le fluide, généralement de l'eau, pénètre dans le filtre par la bride droite 2 et monte tangentiellement dans l'espace compris entre le tube axial accélérateur 6 et le panier filtrant 4 dont la surface lisse est située à l'intérieur. L'écoulement de l'eau se fait tangentiellement à la paroi de l'élément filtrant ou panier 4.

La vitesse acquise ainsi par l'eau permet un balayage de la surface filtrante 4 et son maintien à l'état propre beaucoup plus longtemps que si l'eau la traversait de plein fouet ou avec un certain angle et surtout à basse vitesse.

La vitesse active détermine la zone de filtration en haut de l'élément 4, c'est-à-dire à l'aval de la crépine.

Les impuretés ont donc tendance à s'arrêter soit au-delà du panier filtrant 4 soit à son extrémité supérieure soit encore dans le tube de chasse 6 qui présente une capacité. Cette zone de colmatage redescend petit à petit au fur et à mesure de l'augmentation du colmatage et de la durée d'utilisation du filtre.

On peut nettoyer le panier 4 en ouvrant la chasse 7 qui accélère la vitesse de balayage et entraîne les impuretés au-delà de la crépine 4 vers l'intérieur du tube axial 6 et les expulse par sa sortie inférieure 7.

Dans tous les cas, le balayage de la surface filtrante 4 est assuré par la vitesse de l'eau le long de la paroi filtrante et ceci tangentiellement à cette surface.

Si malgré cela il était nécessaire de nettoyer mécaniquement ou au jet le panier 4 filtrant, son démontage se fait très facilement en ouvrant simplement le couvercle supérieur 8.

La figure 2 est un détail du montage de l'élément filtrant 4, formé par exemple par des fils 9 verticaux et des anneaux 10, maintenu entre deux bagues 11,12 enfilées sur le tube central. La bague supérieure 12 est serrée entre un flasque 13 solidaire de l'enveloppe 5 et second flasque 14 solidaire du couvercle 8. La bague inférieure 11 s'emboîte sur l'extrémité du canal d'entrée 2. Ces flasques 13,14 sont vissés par des vis et des boulons permettant un enlèvement facile du couvercle et donc de l'élément filtrant 4,9,10.

La seconde forme d'exécution du filtre à panier illustrée à la figure 3 est identique à la première forme d'exécution au fait près que l'enveloppe 5, le tube 6 et le panier 4 ou crépine qui sont coaxiaux s'étendent suivant un axe x-x formant un angle différent de 90° par rapport aux axes des entrée 2 et sortie 3 comme c'est le cas dans la première forme d'exécution. Pour certaines configurations ceci peut s'avérer avantageux l'encombrement vertical étant réduit et la chasse 7 pouvant être dirigée parallèlement à l'entrée 2.

Dans les deux formes d'exécution décrites les entrées 2 sont coaxiales aux sorties 3, ceci n'est bien sûr qu'une exécution préférée, l'entrée 2 et la sortie 3 pouvant former un angle entre elles.

## Revendications

1. Filtre à panier démontable, caractérisé par le fait que l'écoulement du fluide, généralement de l'eau, s'effectue substantiellement tangentiellement à la paroi de l'élément filtrant sur la quasi totalité de celle-ci en sens opposés d'un côté et de l'autre de cette paroi.

2. Filtre selon la revendication 1, caractérisé par le fait que la crépine ou panier est constituée d'un élément filtrant tubulaire unique.

3. Filtre selon la revendication 1, caractérisé par le fait que la crépine ou panier est constituée par une pluralité d'éléments filtrants tubulaires alimentés en parallèle.

4. Filtre selon la revendication 3, caractérisé par le fait que les éléments filtrants tubulaires ont des axes parallèles les uns aux autres.

5. Filtre selon l'une des revendications précédentes, caractérisé par le fait qu'il comporte une enveloppe munie d'une entrée et d'une sortie, l'entrée étant en communication avec un côté de l'élément filtrant et la sortie avec l'autre côté de cet élément filtrant ; par le fait que le côté de l'élément filtrant communiquant avec la sortie de l'enveloppe est obturé dans sa partie éloignée de la sortie.

6. Filtre selon l'une des revendications précédentes, caractérisé par le fait que l'enveloppe est obturée à l'une de ses extrémités par un couvercle amovible.

7. Filtre selon l'une des revendications précédentes, caractérisé par le fait qu'il comporte un élément tubulaire, accélérant l'écoulement du fluide, situé à l'intérieur de l'élément filtrant, ouvert à son extrémité proche du couvercle de l'enveloppe et émergeant de façon étanche à l'autre extrémité de l'enveloppe hors de celle-ci, cette dernière extrémité de l'élément tubulaire pouvant être munie d'une vanne.

8. Filtre selon l'une des revendications précédentes, caractérisé par le fait que le panier est maintenu en place par une bague emboîtée dans l'extrémité du conduit d'entrée et par une seconde bague pincée entre l'enveloppe et le couvercle, ces deux bagues étant disposées autour de l'élément tubulaire central.

9. Filtre selon l'une des revendications précédentes, caractérisé par le fait que l'entrée et la sortie sont coaxiales.

10. Filtre selon la revendication 9, caractérisé par le fait que l'axe du panier forme un angle de 90° par rapport à l'axe de l'entrée et de la sortie.

FIG. 1

FIG. 2

FIG. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X,D | GB-A- 118 855 (A. BONTEMPS) <br> * Figure 5 * | 1 | B 01 D 29/30 <br> B 01 D 29/02 |
| A | | 2,5 | |
| Y,D | US-A-1 579 205 (G.W. BLAKESLEY) <br> * Pages 1,2 * | 1 | |
| A | | 2,5,7,9,10 | |
| Y,D | GB-A-2 134 807 (H.W. MORGAN) <br> * Figures 3,4 * | 1 | |
| A | | 2,5,6,7,8,9,10 | |
| Y,D | EP-A-0 057 034 (AB METALL- & BERGPRODUKTER) <br> * Page 2, dernier paragraphe; pages 3,4 * | 1 | |
| A | | 2,5,6,7,8,9,10 | |
| A | FR-A-2 377 219 (BECKER APPARATEBAU) <br> * Figure unique * | 1,2,3,4 | |
| A | US-A-2 730 242 (F.B. SAMUEL) | | |
| A | DE-B-1 203 044 (DAIMLER-BENZ) | | |

DOMAINES TECHNIQUES RECHERCHES (Int. Cl.4)

B 01 D

**Le présent rapport a été établi pour toutes les revendications**

| Lieu de la recherche | Date d'achèvement de la recherche | Examinateur |
|---|---|---|
| LA HAYE | 03-04-1989 | DE PAEPE P.F.J. |